# DEMANDE DE BREVET EUROPEEN

(11) **EP 2 335 483 A1**
(43) Date de publication de la demande: **22.06.2011**
(21) Numéro de dépôt: 10306460.6
(22) Date de dépôt: 20.12.2010
(51) Int. Cl.: A21B 1/48, A21B 2/00, H05B 6/80

(54) **Dispositif de traitement thermique en continu par microondes de produits, notamment alimentaires**

(30) Priorité: 21.12.2009 FR 0959309
(71) Demandeur: Techdiss Technologies S.L., 17740 Vilafant - Girona (ES)
(72) Inventeur: Tastavin, Serge, 17742, Avinyonet de Puigventos (ES)
(74) Mandataire: Fantin, Laurent

(57) **Abrégé**

L'objet de l'invention est un dispositif de chauffage de produits par microondes comprenant un tunnel, une bande mobile en translation dans ledit tunnel et portant lesdits produits, au moins un magnétron disposé sur ledit tunnel de façon à émettre des microondes dans ce tunnel, caractérisé en ce que la bande est métallique.

## Description

La présente invention concerne un dispositif de traitement en continu par microondes de produits, notamment de produits alimentaires.

On entend par produits alimentaires plus particulièrement dans la présente invention, mais de façon non limitative, des articles de boulangerie ou de pâtisserie, des fruits, des légumes, des graines et plus spécifiquement des graines d'oléagineux.

L'utilisation des microondes dans le domaine agroalimentaire est bien connue et ceci pour de très nombreuses applications.

Pour du travail en continu, adapté aux contraintes de cadence et de rendement de l'industrie, les dispositifs mis en oeuvre sont des tunnels équipés de magnétrons et de guides d'ondes permettant de focaliser l'énergie vers les produits destinés à les recevoir.

De façon connue, les produits sont disposés sur une bande convoyeuse, dans des contenants et/ou en vrac lorsqu'ils sont monolithiques comme un pain par exemple.

La bande convoyeuse traverse le tunnel à une vitesse déterminée, calculée pour que les produits reçoivent la quantité d'énergie prévue.

Les avantages des microondes sont bien connus.

Les microondes permettent de travailler la matière à coeur et non par conduction à travers ladite matière de l'extérieur vers l'intérieur. On note que lorsque la matière est contenue dans un moule, il faut d'abord chauffer le moule avant d'atteindre la matière ce qui est long.

Un four microondes présente une très faible inertie car il n'y a pas à chauffer l'environnement, l'énergie étant principalement focalisée sur les produits.

Le rendement énergétique de conversion de l'électricité en microondes est favorable.

Néanmoins, on a constaté que les microondes même focalisées le sont de façon partielle car il se produit des pertes.

Notamment, la carcasse métallique périphérique qui assure le rôle de bouclier vis-à-vis des personnels servant, absorbe une partie tandis qu'une autre partie est diffusée vers certains points environnants sans atteindre uniquement la cible. Cette diffusion peut de plus varier lorsqu' il y a des produits sur la bande du fait qu'il n'est prévu aucun moyen de concentration des énergies en une zone identifiée.

Un autre effet pervers est la répartition peu homogène de l'énergie dans le tunnel.

D'une part, il se produit des pertes et d'autre part, l'énergie n'étant pas homogène, les produits ne reçoivent pas un flux d'énergie continu et constant. On a constaté aussi que, en cas de défaut d'avance du tapis par exemple, des points de surchauffe se produisent qui peuvent conduire à la combustion du tapis. Ce tapis est généralement réalisé en matériau polymère mais dont la résistance à la température est néanmoins limitée même pour du polytétrafluroéthylène ou des fibres aramides enduites.

Il serait donc souhaitable de proposer un agencement qui, notamment, permet de diminuer les pertes, qui supprime tout risque d'incendie, qui est apte à une intégration dans une chaîne en continu, qui permet une distribution homogène de l'énergie en focalisant quasiment intégralement sur les produits à traiter, qui peut être rapporté sur les installations existantes et qui perturbe de façon très limité les procédés de conduite des installations.

Le dispositif équipé de cet agencement est maintenant décrit en détail suivant un mode de réalisation particulier, avec au moins une variante, ces modes de réalisation n'ayant aucun caractère limitatif.

Cette description est établie en regard des dessins annexés, dessins sur lesquels les différentes figures représentent :

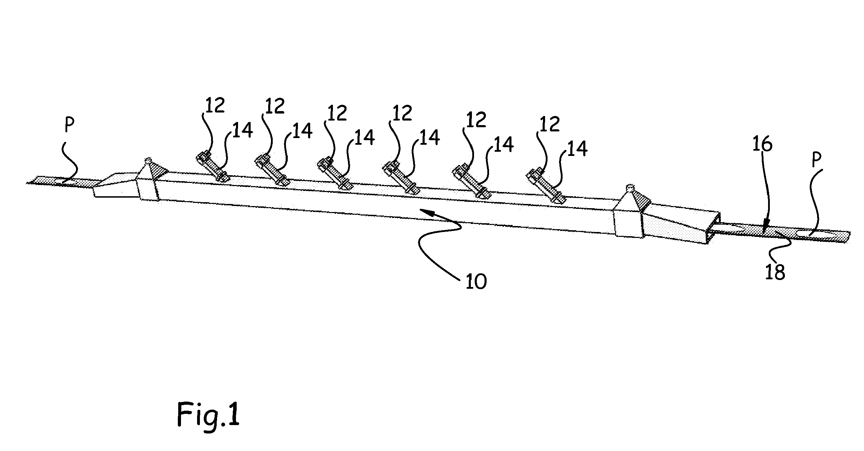

- Figure 1 : une vue schématique en perspective du dispositif selon la présente invention,

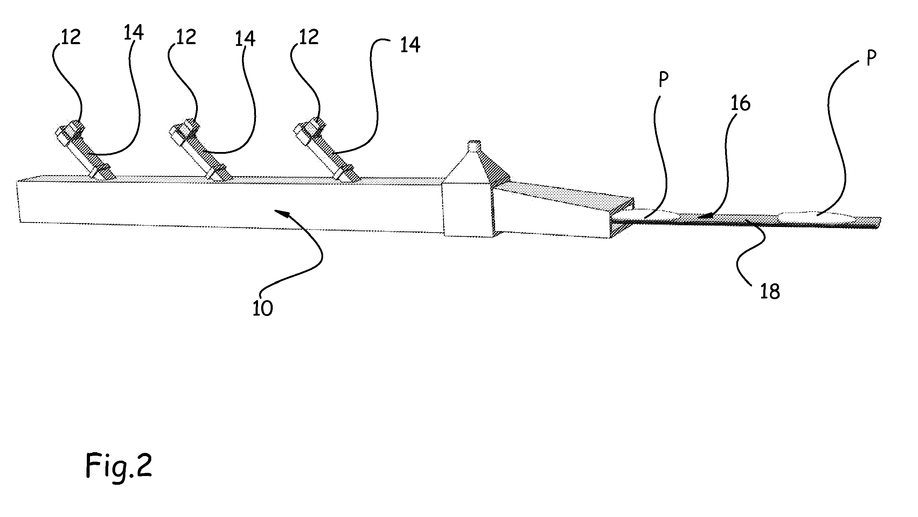

- Figure 2 : une vue schématique partielle, à plus grande échelle, en perspective du dispositif selon la présente invention,
- Figures 3 et 4 : une vue des répartitions des flux d'énergie comparées entre un tapis de l'art antérieur et un tapis métallique, respectivement, suivant un plan YZ, à température ambiante,
- Figures 5 et 6 : une vue des répartitions des flux d'énergie comparées entre un tapis de l'art antérieur et un tapis métallique, respectivement, suivant un plan XY, à température ambiante,
- Figures 7 et 8 : une représentation des plans de coupe par rapport au dispositif selon l'invention,
- Figures 9 et 10 : une vue des répartitions des flux d'énergie comparées entre un tapis de l'art antérieur et un tapis métallique, respectivement, suivant un plan YZ, à une température de 80°C,
- Figures 11 et 12 : une vue des répartitions des flux d'énergie comparées entre un tapis de l'art antérieur et un tapis métallique, respectivement, suivant un plan XY, à une température de 80°C,
- Figures 13 et 14 : une vue des répartitions des flux d'énergie comparées entre un tapis de l'art antérieur et un tapis métallique, respectivement, suivant un plan YZ, à une température de 120°C, - Figures 15 et 16 : une vue des répartitions des flux d'énergie comparées entre un tapis de l'art antérieur et un tapis métallique, respectivement, suivant un plan XY, à une température de 120°C.

Le dispositif selon la présente invention comprend un tunnel 10, équipé d'au moins un magnétron 12 émetteur de microondes et d'un guide d'ondes 14 associé audit magnétron.

Le tunnel est généralement métallique de façon à interdire l'émission de microondes, extérieurement.

L'exemple retenu concerne la cuisson de pains P, mis en forme préalablement à la dépose sur la bande.

Ce tunnel comprend des moyens 16 de convoyage desdits pains.

Ces moyens de convoyage sont constitués d'une bande 18, en l'occurrence une bande métallique. Une telle bande est un feuillard de faible épaisseur de façon à permettre une courbure dudit feuillard.

Cette bande est de façon connue entraînée en translation à travers le tunnel 10 par des moyens adaptés, non représentés. De tels moyens peuvent comporter par exemple des poulies menante et menée, la bande étant tendu et continue entre ces deux poulies.

La vitesse de déplacement de la bande est adaptée au temps de cuisson et donc au temps nécessaire de passage dans le tunnel.

Le mode de réalisation simplifié représenté consiste donc à placer une bande métallique en lieu et place des bandes en matériau polymère existantes.

Il s'agit là d'un préjugé vaincu car il est indiqué dans la littérature que l'émission de microondes est incompatible avec un support métallique.

De façon préférentielle, il convient de mettre en contact électrique la bande métallique mobile et le tunnel 10.

Or, on constate que la présence de cette bande métallique conduit à plusieurs effets techniques et à des résultats extrêmement avantageux.

Ces résultats sont mis en exergue à travers des tests de répartition des flux de rayonnement microondes dans un tunnel identique, le premier muni d'une bande en matériau polymère et l'autre muni d'une bande en matériau métallique.

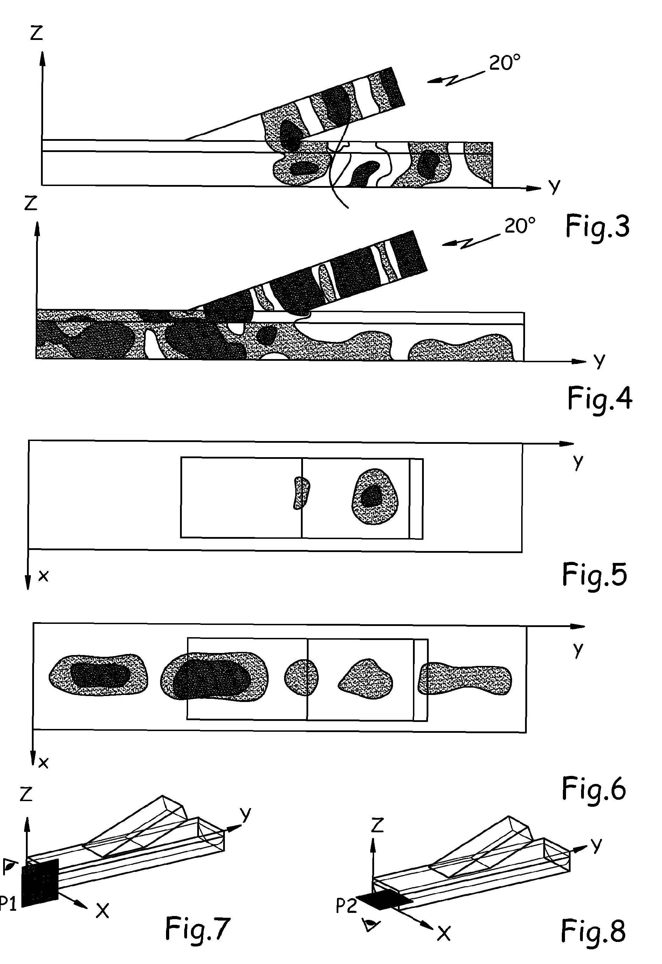

Sur les figures 7 et 8, on a représenté les plans YZ et XY dans lesquels les répartitions des microondes sont représentées et comparées.

Le plan YZ est un plan vertical médian.

Le plan XY correspond exactement au positionnement des pains sur la bande. Sur les figures 3 à 6, la température des produits est la température ambiante. On constate sur la figure 3 que les microondes se propagent plutôt en amont de l'entrée du guide d'ondes et surtout on constate une forte concentration de l'énergie sur l'angle que fait le guide d'ondes avec le tunnel.

La figure 4 montre au contraire une répartition plus homogène et sans concentration d'énergie fortement localisée.

Sur les figures 5 et 6, la différence de répartition est encore plus flagrante, car on constate que sur la bande, la densité d'énergie au coeur des pains est non seulement importante mais dispensée sur une surface plus importante, conduisant à des résultats de cuisson plus homogènes.

On note également une concentration sur la largeur de la bande et sur une grande longueur.

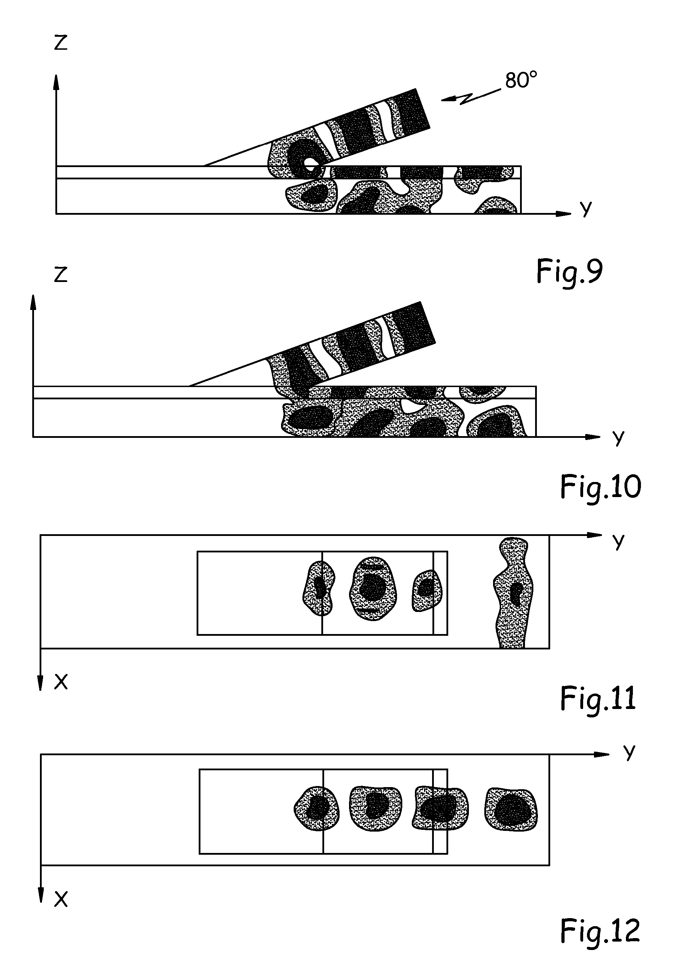

Sur les figures 9 à 11 relatives à une température des produits portée à 80°C, le phénomène est amplifié et les figures montrent une répartition régulière sans aucune dispersion hors bande, ladite bande agissant comme un focalisateur d'énergie et ceci sur une longueur suffisante pour éviter toute concentration préjudiciable à la bonne cuissons des pains.

Sur la hauteur du tunnel, l'énergie est aussi plus focalisée sur les pains et non sur toute la hauteur du tunnel, inutilement car ce n'est pas le tunnel qu'il convient de porter en température.

Cette dispersion inutile en hauteur est encore plus flagrante quand la température augmente. A une température des produits portée à 120°C, sur la bande en matériau de synthèse type polymère, les points chauds en partie haute du tunnel sont nombreux et ceci sur des surfaces importantes.

On note aussi de façon préjudiciable à l'homogénéité une localisation de l'énergie sur les bords de la bande, ce qui provoque des points chauds dans le produit, latéralement.

L'intérêt des microondes est de porter l'énergie au coeur du produit mais à condition que la répartition spatiale soit homogène.

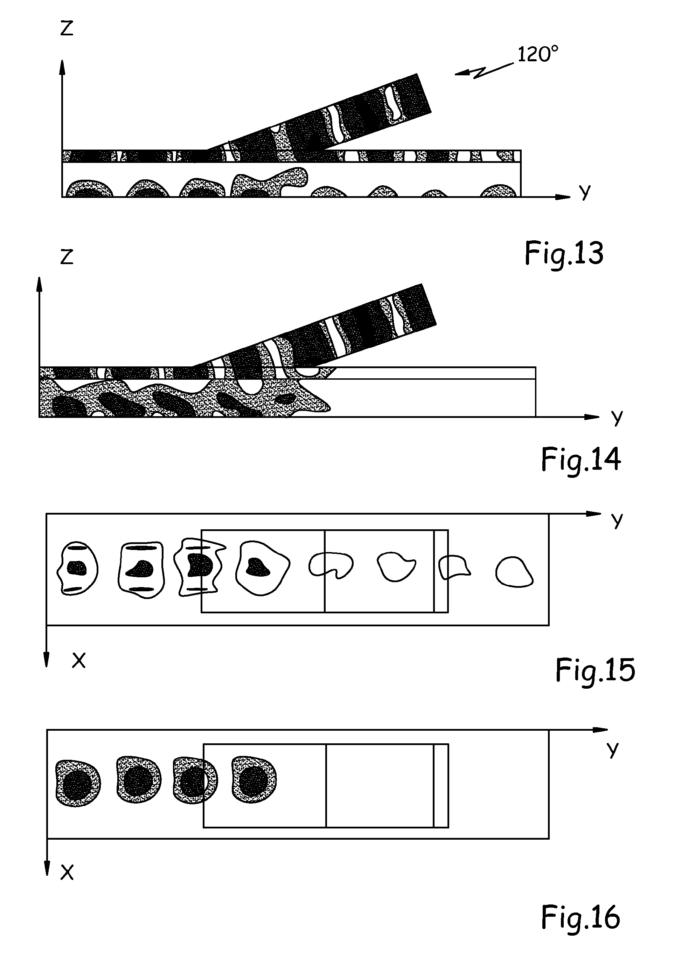

On constate figure 15 que l'énergie est focalisée sur la zone correspondant à la bande et donc aux produits portés et translatés par elle, ceci de façon régulière, par zone successive d'intensités comparables.

On constate donc que, de façon surprenante, une bande métallique conduit à un phénomène de concentration de l'énergie mise dans la plage de fréquence des microondes sur une zone définie, tout en gardant une répartition homogène sur cette zone.

Selon le mode préféré, la bande est plane dans l'hypothèse simple première, mais on constate que le phénomène est encore plus marqué lorsque la bande est courbe comme schématiquement montré sur les figures 7 et 8.

Ceci présente de plus l'avantage de pouvoir travailler des matières en vrac telles que des graines, plus particulièrement des graines oléagineuses ou d'autres matières sous forme de granulés ou de poudres.

Dans le cas d'une bande à profil en U ouvert, en U, en Vé ou en Vé ouvert, il faut bien sûr prévoir une lise à plat de ladite bande préalablement à la rotation autour de la poulie de façon à garder la possibilité de travailler en continu.

Il est aussi possible de prévoir des bandes avec des écailles articulées entre elles et étanches de façon à transférer des produits d'une faible viscosité. La section peut être en Vé ouvert, en U ouvert ou en U.

Le dispositif selon la présente invention est donc très avantageux du point de vue de la qualité du chauffage fourni grâce à une excellente distribution spatiale sur une zone qui est définie et localisée.

Les pertes d'énergie évitées vers l'enceinte ou dans l'air sont autant d'économie.

Les produits sont d'une qualité meilleure et surtout peuvent être travaillés à plus grande vitesse, d'où une augmentation possible des cadences.

L'enceinte peut aussi être chauffée par elle-même pour porter le volume intérieur à une certaine température, ce qui permet un traitement des produits par un apport calorifique mixte. Dans ce cas, on constate de nouveau que la répartition des microondes, engendrée par la présence d'un tapis métallique, reste bien plus homogène et plus focalisée que dans le cas du recours à un tapis en matériau polymère.

## Revendications

1. Dispositif de chauffage de produits P par microondes comprenant un tunnel (10), une bande (18) mobile en translation dans ledit tunnel et portant lesdits produits, au moins un magnétron (12) disposé sur ledit tunnel de façon à émettre des microondes à l' intérieur de ce tunnel, **caractérisé en ce que** ladite bande (18) est métallique.

2. Dispositif de chauffage de produits par microondes selon la revendication 1, **caractérisé en ce que** la bande (18) présente une section en U ou en Vé.

3. Dispositif de chauffage de produits par microondes selon la revendication 1 ou 2, **caractérisé en ce qu'**il comprend des moyens de mise en contact électrique de la bande (18) avec le tunnel (10).

4. Utilisation du dispositif de chauffage selon l'une des revendications 1 à 3, pour le traitement thermique produits de boulangerie, de fruits, de légumes, de graines, de graines d'oléagineux.
